# EUROPEAN PATENT SPECIFICATION

(11) **EP 4 667 339 B1**
(45) Date of publication and mention of the grant of the patent: **07.10.2026**
(21) Application number: 25172790.5
(22) Date of filing: 28.04.2025
(51) Int. Cl.: B62K 5/10, B62K 5/02, B62L 3/02, B62L 3/06, B62L 3/08, B60T 11/04, B62K 5/06, B62K 5/00

(54) **TRICYCLE**
DREIRAD
TRICYCLE

(30) Priority: 21.06.2024 JP 2024100578
(43) Date of publication of application: 24.12.2025
(73) Proprietor: Tsubakimoto Chain Co., Osaka 530-0005 (JP)
(72) Inventor: NAKAGOSHIKI, Keita, Osaka, 530-0005 (JP)
(74) Representative: dompatent

(56) References cited:
- FR-A1- 3 080 819
- JP-A- 2015 037 928
- US-A- 4 046 211

## Description

### BACKGROUND OF THE INVENTION

### 1. Field of the Invention

The present invention relates to a tricycle having at least two running wheels movable up and down, and a brake unit for inhibiting the rotation of the running wheels.

### 2. Description of the Related Art

Among conventional tricycles each having a pair of rear wheels, a tricycle configured with a pair of pivotable rear wheels is known, wherein the wheels move pivotably accordingly as the vehicle body tilts during travel, and return to the state before pivoting by a restoring force of springs (see, for example, Japanese Patent Application Publication No. 2005-053420).

### SUMMARY OF THE INVENTION

According to the known tricycle described in Japanese Patent Application Publication No. 2005-053420 (the names and reference numerals in this paragraph are those as used in the publication), the front frame 5 extending in the front and back direction of the vehicle body and supporting the front wheel is pivotably supported on the rear cross frame 3 that supports the left rear wheel 1 and the right rear wheel 2. The end plate 6 with the slide hole 9 is provided to a rear part of the front frame 5. The end plate 6 is engaged with both ends of the rear cross frame 3 via left and right resilient members 7 and 8. At least one of the end plate 6 and the rear cross frame 3 is provided with a resilient member stopper.

When the vehicle body tilts to either side while travel, the front frame 5 and the end plate 6 pivot accordingly. In response to this pivoting motion, one of the resilient members 7 and 8 applies a restoring force to counteract the tilt. This configuration allows the pair of resilient members 7 and 8 to operate individually without mutual interference.

However, in Japanese Patent Application Publication No. 2005-053420 when it is necessary to stop the tricycle loaded with cargo, for example, the weight of the cargo may cause the front frame 5 and the end plate 6 to pivot. If the front frame 5 and the end plate 6 pivot so much as to overcome the restoring force of the resilient members 7 and 8, it may become difficult to keep the vehicle body upright.

Increasing the restoring force of the resilient members 7 and 8 to keep the vehicle body upright may inhibit smooth pivoting of the frame and the end plate of the vehicle during travel.

To stop the vehicle body from rocking and to enable the vehicle body to stand upright without relying on the resilient members, another mechanism for stopping the pivoting movements of the frame 5 and the end plate 6 is required.
Further background art for the present invention is described in FR 3 080 819 A1, US 4 046 211 A and JP 2015 037928 A. Said FR 3 080 819 A1 discloses a tricycle according to the preamble of claim 1.

To solve these problems, an object of the present invention to provide a tricycle having a simple configuration that allows the vehicle body to stand upright at a standstill by reliably inhibiting coordinated movements of pivot arms thereof.

The present invention achieves the above object by providing a tricycle including at least two running wheels movable up and down, and a brake configured to inhibit the rotation of the running wheels. Each of the at least two wheels is disposed on a respective pivot arm. The two pivot arms are pivotable up and down in opposite directions in a coordinated manner. By maintaining the brake unit in an activated state, at least one of the two running wheels is inhibited from rotating, and the pivot arms are stopped from pivoting.

According to the invention set forth in claim 1, the tricycle includes at least two running wheels movable up and down, a brake unit configured to inhibit the rotation of the running wheels, and two pivot arms pivotable up and down in opposite directions in a coordinated manner, the at least two running wheels being disposed on the pivot arms respectively. The brake unit is configured, when being maintained at an activated state, to inhibit at least one of the two wheels from rotating and to be able to stop the pivot arms from pivoting. This enables the vehicle body to be kept upright with a simple configuration.

According to the configuration set forth in claim 2, both of the running wheels are inhibited from rotating when the brake unit is maintained in the activated state. This allows a greater braking force to be applied when the vehicle is upright without obstructing the pivoting movements of the pivot arms, so that the vehicle body is maintained upright more stably.

According to the configuration set forth in claim 1, the brake unit is activated by at least two operation mechanisms, either of the operation mechanisms being configured to be able to stop the pivot arms from pivoting. This allows the pivoting movements to be controlled by an operation system for self-support, for example, separate from the usual operation of a brake lever, allowing the brake unit to be used for different purposes according to situations without requiring another mechanism for controlling the pivoting movements.

According to the configuration set forth in claim 3, the at least two operation mechanisms include a brake lever, and a lock lever having a locking mechanism. The brake unit can be operated manually, and can be maintained in the activated state by the lock lever. Thus the vehicle body can be kept upright at a standstill without obstructing the pivoting movements that occur during the travel of the vehicle body.

According to the configuration set forth in claim 1, the at least two operation mechanisms are connected to the brake unit via a brake actuation mechanism. The brake actuation mechanism includes: a first wire configured to be pulled by one of the at least two operation mechanisms; a second wire configured to be pulled by another one of the at least two operation mechanisms; a brake wire configured to pull and activate the brake unit; and a transmission part configured to connect and transmit tensile force between the first and second wires and the brake wire. The transmission part includes: a transmission part body; a sliding member connected to the second wire; and a tension member connected to the first wire and the brake wire. The transmission part is configured to be able to pull the brake wire, when the first wire is pulled and the first wire thereby pulling the tension member. The transmission part is configured to be able to pull the brake wire, when the second wire is pulled and the second wire thereby pulling the sliding member as well as the tension member making contact with the sliding member. The brake unit can thus be activated through the respective operation mechanisms of the first wire and the second wire, so that the operation mechanisms can be used for different purposes without providing another mechanism for stopping the pivoting movements.

### BRIEF DESCRIPTION OF THE DRAWINGS

FIG. 1 is a perspective view from the front of a tricycle with a brake actuation mechanism according to an embodiment of the present invention;
FIG. 2 is a top view of the tricycle of FIG. 1;
FIG. 3 is a cross-sectional view along A-A in FIG. 2;
FIG. 4 is a perspective view from the top of the running unit of the tricycle in FIG. 1;
FIG. 5 is a perspective view from the front of the running unit of the tricycle in FIG. 1;
FIG. 6 is a side view of the running unit of the tricycle in FIG. 1;
FIG. 7 is a perspective view of the brake actuation mechanism from the first wire unit side;
FIG. 8 is a perspective view of the brake actuation mechanism from the brake wire unit side;
FIG. 9 is an enlarged top view of the transmission part of the brake actuation mechanism;
FIG. 10 is an enlarged side view of the transmission part of the brake actuation mechanism;
FIG. 11 is an enlarged cross-sectional view of the transmission part along B-B in FIG. 9;
FIG. 12 is an enlarged cross-sectional view of the transmission part along C-C in FIG. 9;
FIG. 13 is an enlarged top view of the transmission part of the brake actuation mechanism when the first operation mechanism is operated;
FIG. 14 is an enlarged cross-sectional view of the transmission part along D-D in FIG. 13;
FIG. 15 is an enlarged top view of the transmission part of the brake actuation mechanism when the second operation mechanism is operated; and
FIG. 16 is an enlarged cross-sectional view of the transmission part along E-E in FIG. 15.

### DESCRIPTION OF THE PREFERRED EMBODIMENTS

A tricycle 100 with a brake actuation mechanism 300 according to an embodiment of the present invention is outlined below with reference to the drawings.

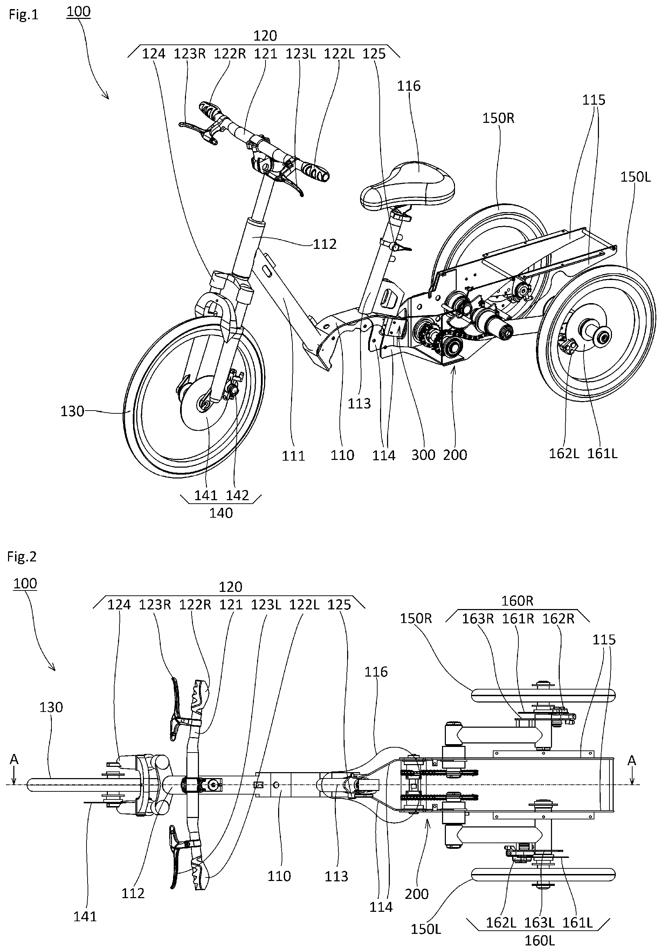

In FIG. 1 to FIG. 3, other configurations found in a vehicle such as the driving unit and gears are not illustrated.

Although not shown in FIG. 1 and FIG. 2, in actuality, a first wire unit 310 is connected to a left brake lever 123L, and a second wire unit 320 is connected to a lock lever 125. Rear-wheel brake units 160 can be activated by operating the left brake lever 123L or the lock lever 125.

Although not shown in FIG. 1 to FIG. 3, in actuality, a pair of brake wire units 330 is connected to the brake actuation mechanism 300, so that the rear-wheel brake units 160 can be activated when the left brake lever 123L or the lock lever 125 is operated.

Directions such as front, rear, right, and left as used herein refer to directions as seen by the user driving the tricycle 100 straight ahead.

As shown in FIG. 1 to FIG. 3, the tricycle 100 includes a main frame 110, an operation unit 120, a front wheel 130, a front-wheel brake unit 140, a pair of left and right rear wheels 150 (right rear wheel 150R and left rear wheel 150L), a pair of left and right rear-wheel brake units 160 (right rear-wheel brake unit 160R and left rear-wheel brake unit 160L), a running unit 200, and the brake actuation mechanism 300.

The main frame 110 includes a down tube 111, a head tube 112 rotatably supporting a handle 121, and a seat tube 113 supporting a saddle 116.

A pair of left and right front panels 114 is fixed behind the main frame 110, and a pair of left and right rear panels 115 is fixed behind the pair of left and right front panels 114.

In FIG. 1, only the outlines of the left front panel 114 and left rear panel 115 are shown. In FIG. 2, only the outline of the saddle 116 is shown.

The operation unit 120 includes the handle 121 rotatably supported at the upper end of the head tube 112, a pair of left and right handle grips 122 (right handle grip 122R and left handle grip 122L) fixedly attached on the left and right ends of the handle 121, a pair of left and right brake levers 123 (right brake lever 123R and left brake lever 123L) fixedly attached on the left and right sides of the handle 121, a front fork 124 supported at the lower end of the head tube 112 such as to be rotatable with the handle 121, and the lock lever 125 that provides a locking function fixedly attached on the seat tube 113.

The front wheel 130 is rotatably connected to the front fork 124.

The front-wheel brake unit 140 includes a front-wheel brake caliper 142 fixedly attached at the lower end of the front fork 124, and a front-wheel brake disc coaxial and rotatable with the front wheel 130. The brake unit is configured to be able to inhibit the rotation of the front wheel 130.

Next, the running unit 200 of the tricycle 100 is described with reference to the drawings.

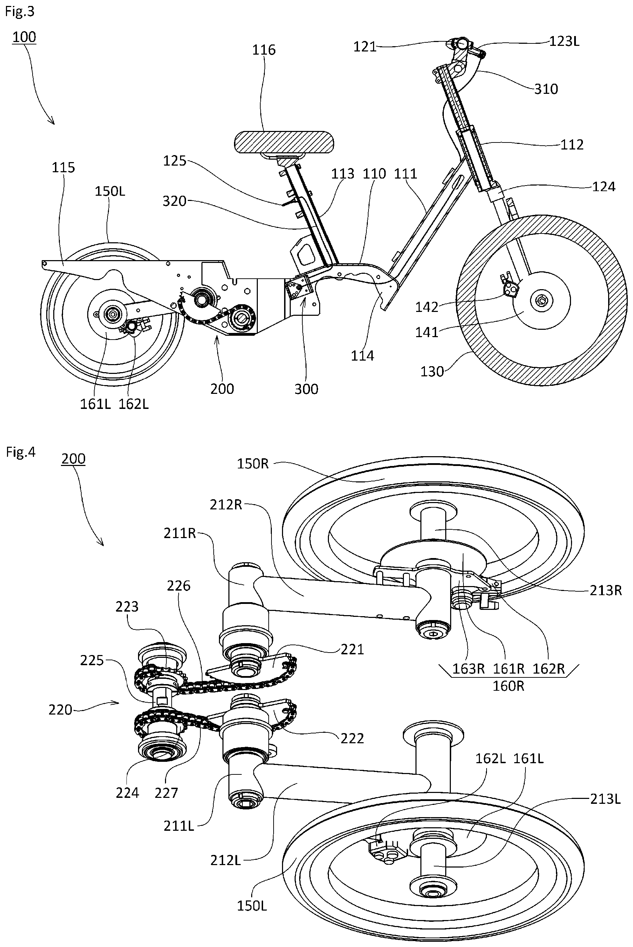

As shown in FIG. 4 to FIG. 6, the running unit 200 includes a pivot motion transmission 220 connected to the front panels 114 and the rear panels 115, a pair of left and right pivot arms 212 (right pivot arm 212R and left pivot arm 212L) provided to the pivot motion transmission 220 such as to be pivotable about pivot shafts 211 (right pivot shaft 211R and left pivot shaft 211L), rear wheels 150 (right rear wheel 150R and left rear wheel 150L) connected to the respective pivot arms 212 such as to be rotatable about rotating shafts 213 (right rotating shaft 213R and left rotating shaft 213L).

The pivot motion transmission 220 includes: a semi-circular right rockable sprocket 221, which is a right rockable rotating element connected to the right pivot arm 212R through the right pivot shaft 211R; a semi-circular left rockable sprocket 222, which is a left rockable rotating element connected to the left pivot arm 212L through the left pivot shaft 211L, a right transmission sprocket 223, which is a right rotating transmission element that transmits rotation through the right rockable sprocket 221 and a right chain 226, which is a right elongated transmission element; and a left transmission sprocket 224, which is a left rotating transmission element that transmits rotation through the left rockable sprocket 222 and a left chain 227, which is a left elongated transmission element.

The right transmission sprocket 223 and the left transmission sprocket 224 are connected by a linking shaft 225 that couples together their rotating shafts.

The right chain 226 is stretched between the lower sides of the right rockable sprocket 221 and the right transmission sprocket 223, one end and the other end of the right chain 226 being fixed to the right rockable sprocket 221 and the right transmission sprocket 223, respectively.

The left chain 227 is stretched between the lower sides of the left rockable sprocket 222 and the left transmission sprocket 224, one end and the other end of the left chain 227 being fixed to the left rockable sprocket 222 and the left transmission sprocket 224, respectively.

The right rockable sprocket 221 and the left rockable sprocket 222 are thus linked such as to be rotatable in opposite directions.

The pair of rear-wheel brake units 160 is configured to be able to inhibit the rotation of the rear wheels 150, and includes: left and right fixing members 163 (right fixing member 163R and left fixing member 163L) respectively connected to the left and right pivot arms 212 (right pivot arm 212R and left pivot arm 212L); left and right rear-wheel brake calipers 162 (right rear-wheel brake caliper 162R and left rear-wheel brake caliper 162L) fixedly attached to the fixing members 163; and left and right rear-wheel brake discs 161 (right rear-wheel brake disc 161R and left rear-wheel brake disc 161L) coaxial and rotatable with the respective rotating shafts 213 (right rotating shaft 213R and left rotating shaft 213L).

Next, the brake actuation mechanism 300 of the tricycle 100 is described with reference to the drawings.

As shown in FIG. 1 and FIG. 3, the brake actuation mechanism 300 is mounted on the inner side of the left front panel 114, and configured to be able to activate the rear-wheel brake units 160 through a first operation mechanism and a second operation mechanism.

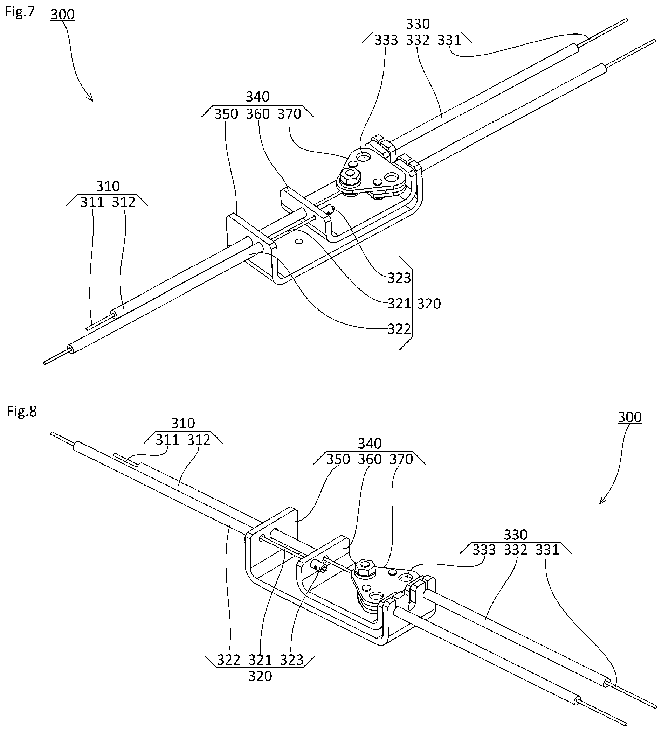

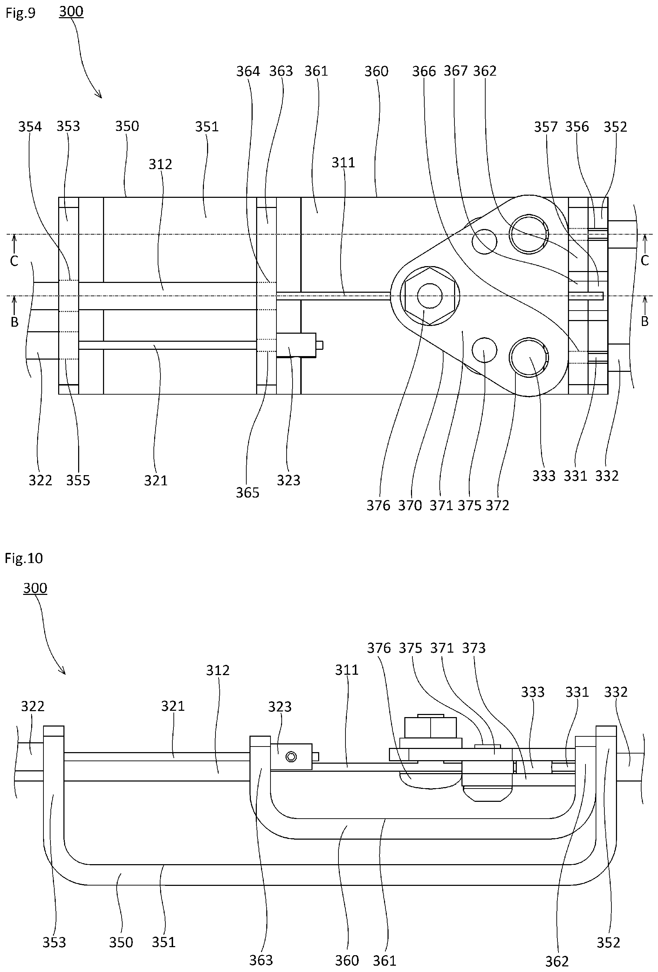

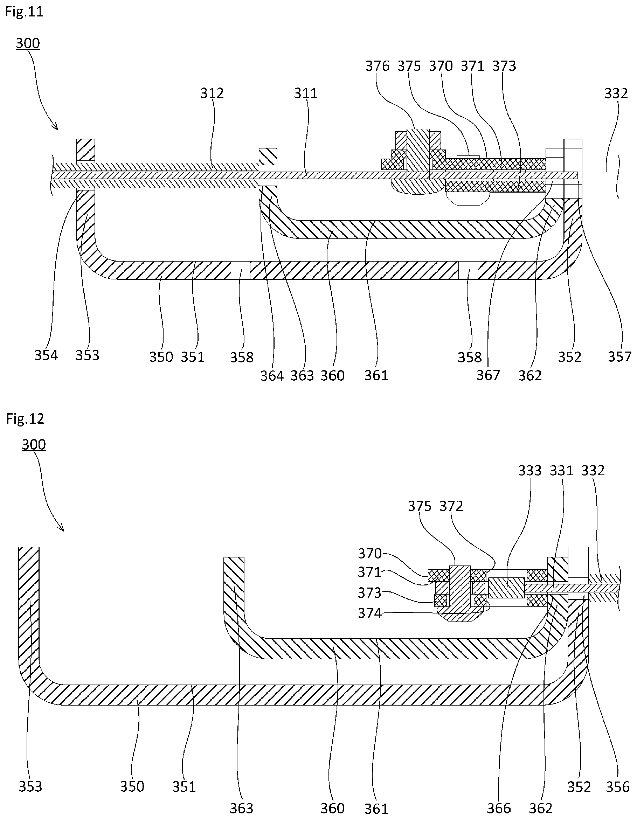

As shown in FIG. 3 and FIG. 7 to FIG. 12, the brake actuation mechanism 300 includes: the first wire unit 310 passed through the down tube 111 and connected to the left brake lever 123L; the second wire unit 320 passed through the seat tube 113 and connected to the lock lever 125; the pair of left and right brake wire units 330 connected to the rear-wheel brake units 160; and a transmission part 340 that transmits tensile force, to which the first wire unit 310, the second wire unit 320, and the pair of left and right brake wire units 330 are connected.

The first wire unit 310 includes a first wire 311, which is movably passed through an outer tube 312.

The first wire 311 is connected to the left brake lever 123L such that when the left brake lever 123L is pulled, the first wire 311 is pulled, too.

The second wire unit 320 includes a second wire 321, which is movably passed through an outer tube 322. An engaging member 323 is provided to one end of the second wire 321.

The second wire 321 is connected to the lock lever 125 such that when the lock lever 125 is pulled, the second wire 321 is pulled, too. When the lock lever 125 is locked in the pulled state, the second wire 321 is also maintained in the pulled state.

Each of the pair of brake wire units 330 includes a brake wire 331, which is movably passed through an outer tube 332. An engaging member 333 is provided to one end of each brake wire 331.

One of the pair of brake wire units 330 is connected to the right rear-wheel brake unit 160R, and the other is connected to the left rear-wheel brake unit 160L such that when the brake wires 331 are pulled, the rear-wheel brake units 160 can be activated.

The transmission part 340 includes a transmission part body 350, a sliding member 360 to which the second wire unit 320 is connected, and a tension member 370 to which the first wire unit 310 and the pair of brake wire units 330 are connected.

The transmission part body 350 has a bottom surface 351 with a mounting hole 358. An abutment wall 352 with slits 356 and 357 for the brake wires and the first wire, and a pull-side wall 353 with through holes 354 and 355 for the first and second wires are formed on the bottom surface 351 in a U-shape.

One end of each outer tube 332 of the pair of brake wires 331 is fixedly attached to the outer side of the abutment wall 352. The brake wires 331 are movably passed through the brake wire slits 356.

The outer tube 312 of the first wire 311 is movably passed through the first wire through hole 354. One end of the first wire 311 is movably passed through the first wire slit 357.

One end of the outer tube 322 of the second wire 321 is fixedly attached to the outer side of the pull-side wall 353. The second wire 321 is movably passed through the second wire through hole 355.

The sliding member 360 has a bottom surface 361. An abutment wall 362 with slits 366 and 367 for the brake wires and the first wire, and a pull-side wall 363 with through holes 364 and 365 for the first and second wires are formed on the bottom surface 361 in a U-shape.

The brake wires 331, which are movably passed through the brake wire slits 356, are each movably passed through the brake wire through holes 366.

One end of the outer tube 312 of the first wire 311, which is movably passed through the first wire through hole 354, is fixedly attached to the outer side of the pull-side wall 363. The first wire 311 is movably passed through the first wire through hole 364. One end of the first wire 311 is movably passed through the first wire slit 367.

The second wire 321, which is movably passed through the second wire through hole 355, is movably passed through the second wire through hole 365 such that the engaging member 323 and the inner side of the pull-side wall 363 are in contact.

The tension member 370 includes a substantially triangular upper member 371 with a first wire fixing member 376 and a pair of upper engaging holes 372; and a lower member 373 with a pair of lower engaging holes 374, the upper and lower members being fixed together by a fastening member 375. The engaging members 333 of the brake wires 331, which are movably passed through the brake wire through holes 366, are engaged with the upper engaging holes 372 and the lower engaging holes 374.

The first wire fixing member 376 is configured to securely hold the first wire 311. With the first wire 311 movably passed through the first wire through hole 364 being securely held, the tension member 370 can be pulled when the first wire 311 is pulled.

When the first wire 311 and the second wire 321 are not pulled, the outer side of the abutment wall 362 of the sliding member 360 is in contact with the inner side of the abutment wall 352 of the transmission part body 350. Moreover, one side of the tension member 370 where the engaging members 333 are engaged is in contact with the inner side of the abutment wall 362 of the sliding member 360.

The transmission part body 350 is longer in the longitudinal direction than the sliding member 360, and the sliding member 360 is longer in the longitudinal direction than the tension member 370.

Therefore, the sliding member 360 can be pulled between the inner side of the abutment wall 352 of the transmission part body 350 and the inner side of the pull-side wall 353. Likewise, the tension member 370 can be pulled between the inner side of the abutment wall 362 of the sliding member 360 and the inner side of the pull-side wall 363.

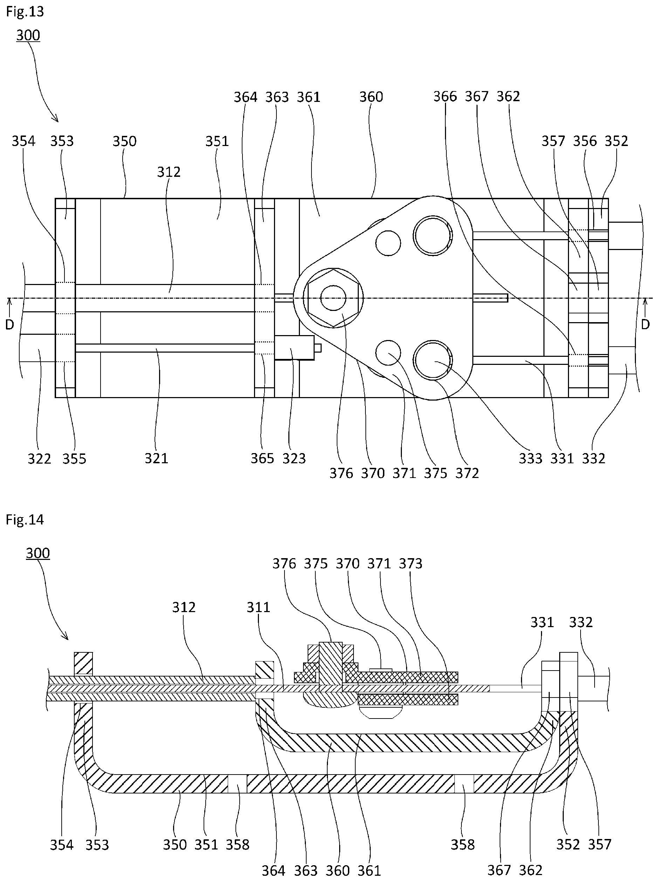

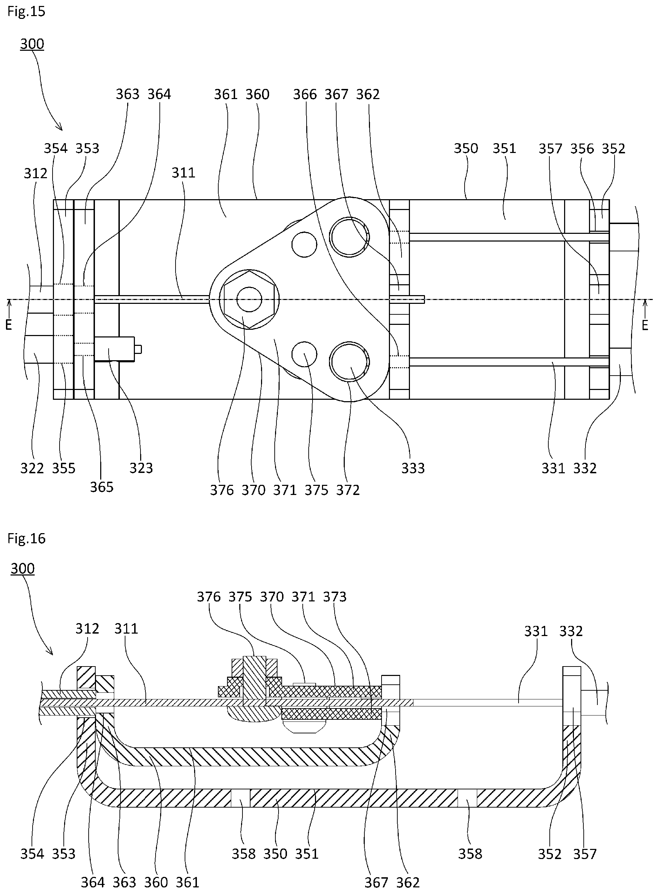

Next, the operation of the rear-wheel brake units 160 when activated by the brake actuation mechanism 300 of the tricycle 100 is described with reference to FIG. 13 to FIG. 16.

The brake actuation mechanism 300 of the tricycle 100 can activate the rear-wheel brake units 160 through the two, first and second, operation mechanisms.

The first operation mechanism is primarily used for adjusting the speed of the tricycle 100 during travel by activating the rear-wheel brake units 160. The second operation mechanism is primarily used for inhibiting coordinated movements of the rear wheels 150 by activating the rear-wheel brake units 160 when the tricycle 100 is at a standstill, to keep the tricycle upright and still.

The rear-wheel brake units 160 can thus be used for different purposes according to the condition of the tricycle 100.

First, the first operation mechanism for activating the rear-wheel brake units 160 by pulling the first wire 311 is described.

When the left brake lever 123L to which the first wire 311 is connected is pulled, the first wire 311 is pulled toward the inner side of the pull-side wall 363 of the sliding member 360.

Since the first wire 311 is fixedly attached to the tension member 370 by the first wire fixing member 376, the tension member 370 is pulled toward the inner side of the pull-side wall 363 of the sliding member 360 as the first wire 311 is pulled.

Likewise, the pair of brake wires 331 engaged with the tension member 370 by the engaging members 333 is pulled toward the inner side of the pull-side wall 363 of the sliding member 360 as the tension member 370 is pulled.

This activates the rear-wheel brake units 160 connected to the pair of brake wires 331.

Since the transmission part body 350 and the sliding member 360 remain in their positions relative to each other, the pulling of the tension member 370 does not slacken the second wire 321.

Next, the second operation mechanism for activating the rear-wheel brake units 160 by pulling the second wire 321 is described.

When the lock lever 125 to which the second wire 321 is connected is pulled, the second wire 321 is pulled toward the inner side of the pull-side wall 353 of the transmission part body 350.

Since the engaging member 323 at the end of the second wire 321 is disposed in contact with the inner side of the pull-side wall 363 of the sliding member 360, the sliding member 360 is pulled toward the inner side of the pull-side wall 353 of the transmission part body 350 as the second wire 321 is pulled.

The inner side of the abutment wall 362 of the sliding member 360 is disposed in contact with the tension member 370, so that the tension member 370 is pulled toward the inner side of the pull-side wall 353 of the transmission part body 350 as the sliding member 360 is pulled.

The pair of brake wires 331 engaged with the tension member 370 is at the same time pulled toward the inner side of the pull-side wall 353 of the transmission part body 350 as the tension member 370 is pulled.

This activates the rear-wheel brake units 160 connected to the pair of brake wires 331.

At this time, the outer tube 312 of the first wire 311 is also pulled toward the pull-side wall 353 of the transmission part body 350 as the sliding member 360 is pulled. Therefore, the sliding member 360 and the tension member 370 remain in their positions relative to each other, so that the pulling of the sliding member 360 does not slacken the first wire 311.

The pulling amount of the second wire 321 via the lock lever 125 can be made greater than that of the first wire 311 pulled by the left brake lever 123L in the first operation mechanism. Namely, the distance by which the sliding member 360 and the tension member 370 are pulled by the second operation mechanism can be made greater than the distance by which the tension member 370 is pulled by the first operation mechanism. This allows the rear-wheel brake units 160 to apply a greater braking force.

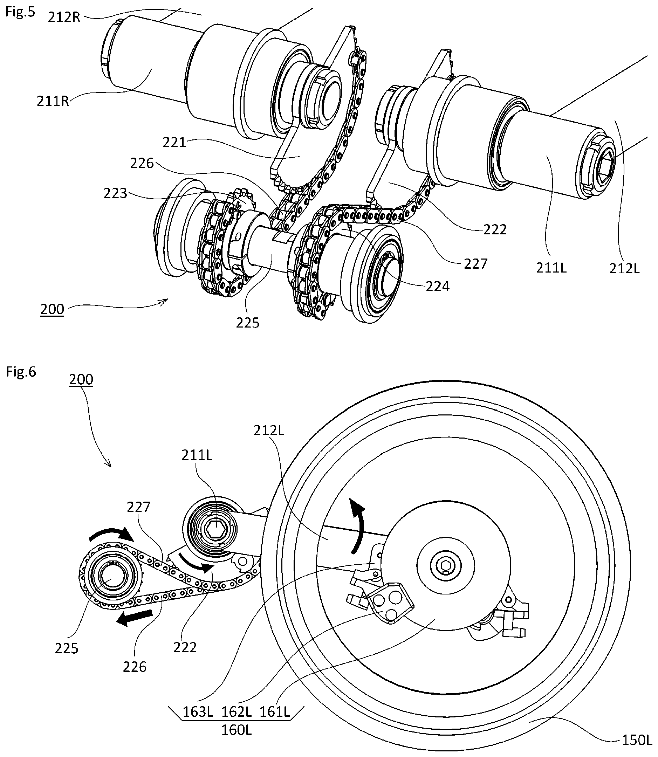

Next, the coordinated movements of the right rear wheel 150R and left rear wheel 150L of the running unit 200 of the tricycle 100 according to the embodiment of the present invention are described with reference to FIG. 5 and FIG. 6.

First, when the vehicle body of the tricycle 100 at a standstill tilts leftward, the left rear wheel 150L rotates with the tilting vehicle body, while the left pivot arm 212L swings up about the left pivot shaft 211L.

At this time, the left rockable sprocket 222 connected to the left pivot arm 212L via the left pivot shaft 211L rotates, too. Since the left chain 227 is wound around the left transmission sprocket 224 and left rockable sprocket 222 in opposite directions, the left transmission sprocket 224 rotates in the opposite direction from the left rockable sprocket 222.

Since the right transmission sprocket 223 and left transmission sprocket 224 are connected together by the linking shaft 225 that couples together their rotating shafts, the right transmission sprocket 223 rotates in the same direction as the left transmission sprocket 224.

The right chain 226 is wound around the right transmission sprocket 223 and right rockable sprocket 221 in the same direction, so that the right rockable sprocket 221 rotates in the same direction as the right transmission sprocket 223, and in the opposite direction from the left rockable sprocket 222.

This causes the right pivot arm 212R connected to the right rockable sprocket 221 via the right pivot shaft 211R to swing down so that the right rear wheel 150R rotates as the vehicle body inclines toward the left.

The linkage between the right rear wheel 150R and the left rear wheel 150L causes the left pivot arm 212L to swing down when the vehicle is tilted rightward.

Next, the locking operation of the tricycle 100 by the second operation mechanism of the brake actuation mechanism 300 of the tricycle 100 is described.

When the vehicle body of the tricycle 100 at a standstill is upright, with neither the right pivot arm 211R nor the left pivot arm 211L being pivoted, pulling the lock lever 125 and locking, in this state, the lock lever 125 cause the second operation mechanism to activate the rear-wheel brake units 160. Locking the lock lever 125 in this state keeps the brakes activated, thereby inhibiting the rotation of the right and left rear wheels 150R and 150L.

With both right and left rear wheels 150R and 150L being stopped from rotating, neither the right pivot arm 212R nor the left pivot arm 212L can pivot, so that the tricycle 100 is kept upright.

This allows the tricycle 100 to remain upright when at a standstill, and requires no self-supporting components such as a stand.

Even when the tricycle 100 is stopped across a slope, the vehicle body can be maintained upright by locking the lock lever 125 with the pivot arms 212 pivoted.

Increasing the amount of pulling of the second wire 321 by the lock lever 125 can increase the braking force applied by the second operation mechanism to the tricycle 100 at a standstill.

Unlocking the lock lever 125 allows the right rear wheel 150R and the left rear wheel 150L to rotate again, so that the right and left rear wheels 150R and 150L can resume their coordinated movements.

While one embodiment of the present invention has been described above in detail, the present invention is not limited to the embodiment described above. Various design changes may be made without departing from the scope of the invention which is defined by the appended claims.

As long as the brake actuation mechanism 300 can activate the rear-wheel brake units 160 via an operation mechanism, the mechanism can be mounted anywhere and not necessarily on the inner side of the left front panel 114 as described above.

The lock lever 125 may be provided in any position easily accessible by the user, such as around the handle 121, and not necessarily on the seat tube 113 as in the embodiment described above.

The tricycle may include another operation mechanism for electrically pulling the second wire 321 with a motor, for example, in addition to the lock lever 125.

Moreover, two front wheels may be provided, and the running unit may be provided for the front wheels.

## Claims

1. A tricycle (100) comprising:
at least two running wheels (150) movable up and down;
a brake unit (160) configured to inhibit rotation of the running wheels (150); and
two pivot arms (212) pivotable up and down in opposite directions in a coordinated manner, the at least two running wheels (150) being disposed on the pivot arms (212) respectively,
the brake unit (160) being configured, when being maintained in an activated state, to inhibit at least one of the two running wheels (150) from rotating and to be able to stop the pivot arms (212) from pivoting, wherein the brake unit (160) is activated by at least two operation mechanisms, either of the operation mechanisms being configured to be able to stop the pivot arms (212) from pivoting,
**characterized in that**
the at least two operation mechanisms are connected to the brake unit (160) via a brake actuation mechanism (300),
the brake actuation mechanism (300) includes:
a first wire (311) configured to be pulled by one of the at least two operation mechanisms;
a second wire (321) configured to be pulled by another one of the at least two operation mechanisms;
a brake wire (331) configured to pull and activate the brake unit (160); and
a transmission part (340) configured to connect and transmit tensile force between the first and second wires (311; 321) and the brake wire (331),
the transmission part (340) includes:
a transmission part body (350);
a sliding member (360) connected to the second wire (321); and
a tension member (370) connected to the first wire (311) and the brake wire (331),
the transmission part (340) is configured to be able to pull the brake wire (331), when the first wire (311) is pulled and the first wire (311) thereby pulling the tension member (370), and
the transmission part (340) is configured to be able to pull the brake wire (331), when the second wire (321) is pulled and the second wire (321) thereby pulling the sliding member (360) as well as the tension member making contact with the sliding member (360).

2. The tricycle (100) according to claim 1, wherein both of the running wheels (150) are inhibited from rotating when the brake unit is maintained in the activated state.

3. The tricycle (100) according to claim 1, wherein the at least two operation mechanisms include a brake lever (123), and a lock lever (125) having a locking mechanism.

## Patentansprüche

1. Dreirad (100), umfassend:
mindestens zwei auf- und abbewegbare Laufräder (150);
eine Bremseinheit (160), die dazu ausgebildet ist, die Drehung der Laufräder (150) zu hemmen; und
zwei koordiniert in zueinander entgegengesetzte Richtungen auf- und abschwenkbare Schwenkarme (212), wobei die mindestens zwei Laufräder (150) jeweils an den Schwenkarmen (212) angeordnet sind,
wobei die Bremseinheit (160) dazu ausgebildet ist, bei Aufrechterhaltung eines aktivierten Zustands mindestens eines der beiden Laufräder (150) am Drehen zu hindern und die Schwenkarme (212) am Schwenken hindern zu können,
wobei die Bremseinheit (160) durch mindestens zwei Betätigungsmechanismen aktiviert wird, wobei jeder der Betätigungsmechanismen dazu ausgebildet ist, die Schwenkarme (212) am Schwenken hindern zu können,
**dadurch gekennzeichnet, dass**
die mindestens zwei Betätigungsmechanismen über einen Bremsbetätigungsmechanismus (300) mit der Bremseinheit (160) verbunden sind,
wobei der Bremsbetätigungsmechanismus (300) umfasst:
einen ersten Draht (311), der dazu ausgebildet ist, von einem der mindestens zwei Betätigungsmechanismen gezogen zu werden;
einen zweiten Draht (321), der dazu ausgebildet ist, von einem anderen der mindestens zwei Betätigungsmechanismen gezogen zu werden;
einen Bremsdraht (331), der dazu ausgebildet ist, an der Bremseinheit (160) zu ziehen und diese zu aktivieren; und
ein Übertragungsteil (340), das dazu ausgebildet ist, den ersten und den zweiten Draht (311; 321) mit dem Bremsdraht (331) zu verbinden und Zugkraft zwischen ihnen zu übertragen,
wobei das Übertragungsteil (340) umfasst:
einen Übertragungsteilkörper (350);
ein mit dem zweiten Draht (321) verbundenes Gleitelement (360); und
ein mit dem ersten Draht (311) und dem Bremsdraht (331) verbundenes Zugelement (370),
wobei das Übertragungsteil (340) dazu ausgebildet ist, den Bremsdraht (331) ziehen zu können, wenn der erste Draht (311) gezogen wird und der erste Draht (311) dadurch das Zugelement (370) zieht, und
wobei das Übertragungsteil (340) dazu ausgebildet ist, den Bremsdraht (331) ziehen zu können, wenn der zweite Draht (321) gezogen wird und der zweite Draht (321) dadurch das Gleitelement (360) sowie das mit dem Gleitelement (360) in Kontakt stehende Zugelement zieht.

2. Dreirad (100) nach Anspruch 1, wobei beide Laufräder (150) am Drehen gehindert werden, wenn die Bremseinheit im aktivierten Zustand gehalten wird.

3. Dreirad (100) nach Anspruch 1, wobei die mindestens zwei Betätigungsmechanismen einen Bremshebel (123) und einen Verriegelungshebel (125) mit einem Verriegelungsmechanismus umfassen.

## Revendications

1. Tricycle (100) comprenant :
au moins deux roues de roulement (150) déplaçables vers le haut et vers le bas ;
une unité de frein (160) configurée pour empêcher la rotation des roues de roulement (150) ; et
deux bras pivotants (212) pivotables vers le haut et vers le bas dans des directions opposées de manière coordonnée, les au moins deux roues de roulement (150) étant disposées sur les bras pivotants (212) respectivement,
l'unité de frein (160) étant configurée, lorsqu'elle est maintenue dans un état activé, pour empêcher au moins l'une des deux roues de roulement (150) de tourner et pour pouvoir arrêter le pivotement des bras pivotants (212),
dans lequel l'unité de frein (160) est activée par au moins deux mécanismes d'actionnement, chacun des mécanismes d'actionnement étant configuré pour pouvoir arrêter le pivotement des bras pivotants (212),
**caractérisé en ce que**
les au moins deux mécanismes d'actionnement sont reliés à l'unité de frein (160) par l'intermédiaire d'un mécanisme d'actionnement de frein (300),
le mécanisme d'actionnement de frein (300) comprend :
un premier câble (311) configuré pour être tiré par l'un des au moins deux mécanismes d'actionnement ;
un deuxième câble (321) configuré pour être tiré par un autre des au moins deux mécanismes d'actionnement ;
un câble de frein (331) configuré pour tirer et activer l'unité de frein (160) ; et
une partie de transmission (340) configurée pour relier et transmettre une force de traction entre les premier et deuxième câbles (311 ; 321) et le câble de frein (331),
la partie de transmission (340) comprend :
un corps de partie de transmission (350) ;
un élément coulissant (360) relié au deuxième câble (321) ; et
un élément de tension (370) relié au premier câble (311) et au câble de frein (331),
la partie de transmission (340) est configurée pour pouvoir tirer le câble de frein (331), lorsque le premier câble (311) est tiré et le premier câble (311) tire de ce fait l'élément de tension (370), et
la partie de transmission (340) est configurée pour pouvoir tirer le câble de frein (331), lorsque le deuxième câble (321) est tiré et le deuxième câble (321) tire de ce fait l'élément coulissant (360) ainsi que l'élément de tension venant en contact avec l'élément coulissant (360).

2. Tricycle (100) selon la revendication 1, dans lequel les deux roues de roulement (150) sont empêchées de tourner lorsque l'unité de frein est maintenue dans l'état activé.

3. Tricycle (100) selon la revendication 1, dans lequel les au moins deux mécanismes d'actionnement comprennent un levier de frein (123) et un levier de verrouillage (125) muni d'un mécanisme de verrouillage.
